# EUROPÄISCHE PATENTSCHRIFT

(11) **EP 3 754 267 B1**
(45) Veröffentlichungstag und Bekanntmachung des Hinweises auf die Patenterteilung: **07.01.2026**
(21) Anmeldenummer: 20164121.4
(22) Anmeldetag: 19.03.2020
(51) Int. Cl.: F24H 9/20, F16K 15/03, F23D 14/82

(54) **RÜCKSTROMSICHERUNGSVENTIL FÜR EIN HEIZGERÄT**
BACKFLOW SAFETY VALVE FOR A HEATING DEVICE
SOUPAPE DE SÉCURITÉ DE COURANT DE RETOUR POUR UN APPAREIL DE CHAUFFAGE

(30) Priorität: 24.05.2019 DE 102019113968
(43) Veröffentlichungstag der Anmeldung: 23.12.2020
(73) Patentinhaber: Vaillant GmbH, 42859 Remscheid (DE)
(72) Erfinder: Gevers, Hendrik, 50859 Köln (DE); Altendorf, Frank, 51467 Bergisch Gladbach (DE)
(74) Vertreter: Popp, Carsten

(56) Entgegenhaltungen:
- EP-A1- 2 871 393
- DE-A1- 2 541 216
- DE-B3- 102009 030 058
- DE-T2- 3 878 118
- KR-A- 20150 118 283
- US-A- 5 950 653
- US-A- 6 155 291
- US-B1- 6 220 282

## Beschreibung

Die Erfindung betrifft ein Heizgerät mit einem Rückstromsicherungsventil. Insbesondere wird eine Mehrfachbelegungsklappe mit doppelter Sicherheitsfunktion bereitgestellt. Weiterhin wird eine mehrfachbelegte Heizungsanlage angegeben.

Wenn mehrere Heizgeräte wie beispielsweise in einem Mehrparteienhaus an einem gemeinsamen Abgassystem angeschlossen sind spricht man allgemein auch von einer Mehrfachbelegung.

Gemäß dem Stand der Technik besteht bei Mehrfachbelegung von Heizungsgeräten an einem Abgassystem stets das Problem, dass Abgase eines Gerätes in einem anderen an das Abgassystem angeschlossenen Gerät austreten können. Diese Gefahr besteht vorwiegend dann, wenn ein Heizungsgerät abgeschaltet ist und somit keinen Gegendruck aufbaut. Hierzu gibt es in den Heizgeräten jeweils ein Rückstromsicherungsventil, welches eine Durchströmung des abgeschalteten Heizgerätes verhindern soll.

Ein gattungsgemäßes Heizgerät mit einem entsprechenden Rückstromsicherungsventil ist aus der EP 2 871 393 A1 bekannt.

Es kann jedoch vorkommen, dass das Rückstromsicherungsventil mit der Zeit nicht mehr vollständig schließt oder sogar ausfällt. Dadurch könnte ein hinsichtlich der Betriebssicherheit kritischer Zustand bei einem abgeschalteten Heizgerät entstehen. Insoweit sind Maßnahmen zu ergreifen, um die Betriebssicherheit zu erhöhen. Regelmäßige Kontrollen und Wartungen der Mehrfachbelegungsklappe können einen Beitrag hierzu leisten, sind jedoch in der Regel zeit- und kostenaufwändig.

Falls das Abdichten des Rückstromsicherungsventils nicht mehr einwandfrei funktioniert, könnte zudem Kondensat in eine Gasarmatur des abgeschalteten Heizgerätes laufen. Dort kann es Dichtungen oder Kunststoffteile angreifen und diese zerstören. Im schlimmsten Fall könnte hierdurch Gas aus dem Gerät austreten.

Aus der KR 2015 0118283 A, der DE 38 78 118 T2, der US 5 950 653 A und der DE 25 41 216 A1 sind diverse Rückschlagventilanordnungen zum Bestimmen der Durchströmungsrichtung von Heißwasserführenden Leitungen bekannt.

Es ist daher Aufgabe der Erfindung, ein Rückstromsicherungsventil bereitzustellen, welches die Betriebssicherheit eines Heizgeräts mit diesem Rückstromsicherungsventil erhöht. Insbesondere soll ein sicherheitskritischer Zustand aufgrund einer Fehlfunktion des Rückstromsicherungsventil möglichst vermieden werden.

Zudem soll ein Rückstromsicherungsventil geschaffen werden, welches eine einfache Montage ermöglicht und ein sicheres Abdichten gewährleistet. Letzteres kann auch dazu beitragen eine Beschädigung des Gerätes durch Korrosion möglichst zu verhindern.

Diese Aufgabe wird mit einem Heizgerät gemäß den Merkmalen des Anspruchs 1 gelöst. Vorteilhafte Ausgestaltungen ergeben sich durch die Merkmale der abhängigen Ansprüche.

Es wird ein Heizgerät mit einem Gebläse und einem Brenner, zwischen denen ein Rückstromsicherungsventil angeordnet ist, bereitgestellt. Das Rückstromsicherungsventil umfasst:
- eine Gehäuseeinheit, durch die ein in einer vorgegebenen Durchströmungsrichtung durchströmbarer Kanal verläuft, wobei die Gehäuseeinheit im Bereich eines Flansches eines Rohrs des Heizgeräts fixiert ist und ausgehend von dem Flansch zumindest teilweise in das Rohr hineinragt,
- ein erstes Schließelement, welches dazu eingerichtet und angeordnet ist selbsttätig eine Schließstellung einzunehmen, um eine Durchströmung des Kanals entgegen der vorgegebenen Durchströmungsrichtung zu verhindern,
- ein zweites Schließelement, welches in der Durchströmungsrichtung von dem ersten Schließelement beabstandet ist und welches dazu eingerichtet und angeordnet ist selbsttätig eine Schließstellung einzunehmen, um eine Durchströmung des Kanals entgegen der vorgegebenen Durchströmungsrichtung zu verhindern, wobei das erste Schließelement und das zweite Schließelement in oder an der Gehäuseeinheit angeordnet sind.

Durch die Kombination zweier Schließelemente, die gleichartig oder unterschiedlich aufgebaut sein können, wird die Betriebssicherheit erhöht. Dies bedeutet hinsichtlich der möglichen Ausgestaltung des Rückstromsicherungsventils als Mehrfachbelegungsklappe mit anderen Worten insbesondere, dass eine Mehrfachbelegungsklappe geschaffen wird, welche eine doppelte Dichtungsfunktion besitzt. Falls eine Klappe ausfällt, ist dort immer noch eine weitere Klappe, sodass ein kritischer Zustand weitgehend vermieden werden kann. Dies erlaubt in vorteilhafter Weise einen sicherheitskritischen Zustand aufgrund einer Fehlfunktion des Rückstromsicherungsventils möglichst zu vermeiden.

Das erste Schließelement und das zweite Schließelement sind in oder an der Gehäuseeinheit angeordnet. Beispielsweise kann das erste Schließelement in oder an einer ersten (unteren) Stirnseite der Gehäuseeinheit angeordnet sein. In diesem Zusammenhang kann das zweite Schließelement in oder an einer zweiten (oberen) Stirnseite der Gehäuseeinheit angeordnet sein. Zwischen der ersten und der zweiten Stirnseite erstreckt sich der Kanal, der in beide Stirnseiten mündet. Das erste Schließelement bedeckt in seiner Schließstellung üblicherweise eine erste (Kanal-)Öffnung in der ersten Stirnseite der Gehäuseeinheit. Das zweite Schließelement bedeckt in seiner Schließstellung üblicherweise eine zweite (Kanal-)Öffnung in der zweiten Stirnseite der Gehäuseeinheit.

Durch das Vorsehen der Gehäuseeinheit und die Integration beider Schließelemente in die bzw. an der Gehäuseeinheit kann in vorteilhafter Weise eine einfache Montage ermöglicht werden. Insbesondere ermöglicht die Gehäuseeinheit die gleichzeitige Montage beider Schließelemente bzw. die Montage beider Schließelemente in nur einem Schritt. Darüber hinaus kann die Gehäuseeinheit auch zu einem möglichst sicheren Abdichten beitragen, beispielsweise durch eine verbesserte Anordenbarkeit und/oder Ausrichtbarkeit des Rückstromsicherungsventils bezüglich weiterer Komponenten des Heizgeräts.

Erfindungsgemäß wird ein Heizgerät mit einem hier beschriebenen Rückstromsicherungsventil vorgeschlagen. Bei dem Heizgerät handelt es sich in der Regel um ein Gas-und/oder Ölheizgerät. Dies betrifft mit anderen Worten insbesondere ein Heizgerät, welches dazu eingerichtet ist, einen oder mehrere fossile Brennstoffe wie etwa Erdgas und/oder Erdöl, ggf. unter Zufuhr von Umgebungsluft aus einem Gebäude zu verbrennen, um Energie zur Erwärmung von beispielsweise Wasser zum Gebrauch in einer Wohnung zu erzeugen. Beispielsweise kann es sich bei dem Heizgerät um ein sogenanntes Gas-Brennwertgerät handeln. Das Heizgerät weist in der Regel zumindest einen Brenner und eine Fördereinrichtung wie etwa ein Gebläse auf, die ein Gemisch von Brennstoff (Gas) und Verbrennungsluft (durch einen Gemischkanal des Heizgeräts) zum Brenner fördert. Anschließend kann das durch die Verbrennung entstehende Abgas durch ein (internes) Abgasrohr des Heizgeräts zu eines Abgasanlage (eines Hauses) geführt werden. An dieser Abgasanlage sind in der Regel mehrere Heizgeräte angeschlossen.

Dabei ist die Gehäuseeinheit (bzw. das Rückstromsicherungsventil) im Bereich eines Flansches eines Rohrs des Heizgeräts fixiert und ragt ausgehend von dem Flansch zumindest teilweise in das Rohr hinein. Bevorzugt ist das Rückstromsicherungsventil zwischen einer Fördereinrichtung (Gebläse) und einem Brenner des Heizgeräts angeordnet. In diesem Zusammenhang kann die Gehäuseeinheit (bzw. das Rückstromsicherungsventil) im Bereich eines hin zu der Fördereinrichtung weisenden Flansches eines die Fördereinrichtung mit dem Brenner verbindenden Rohrs des Heizgeräts fixiert sein und sich ausgehend von diesem Flansch zumindest teilweise in das Rohr (in Richtung hin zu dem Brenner, aber insbesondere nicht bis zu dem Brenner) hinein erstecken.

Dies kann mit anderen Worten insbesondere auch so beschrieben werden, dass das erste Schließelement und das zweite Schließelement in oder an der (gemeinsamen) Gehäuseeinheit angeordnet sind, welche im Bereich nur eines Flansches eines Rohrs des Heizgeräts fixiert bzw. befestigt ist.

Nach einer vorteilhaften Ausgestaltung wird vorgeschlagen, dass das erste Schließelement und/oder das zweite Schließelement mit einer Klappe gebildet ist. Bevorzugt sind das erste Schließelement mit einer ersten Klappe und das zweite Schließelement mit einer zweiten Klappe gebildet. Die Klappen sind dabei in der Regel schwenkbar an der Gehäuseeinheit gelagert. In dieser Ausführungsform kann das Rückstromsicherungsventil eine vorteilhafte Ausgestaltung einer Mehrfachbelegungs(-doppel-)klappe darstellen.

Das erste Schließelement und das zweite Schließelement ist in der Regel jeweils so gebildet, dass es (bei unerlaubter Durchströmung entgegen der vorgegebenen Durchströmungsrichtung) selbststätig schließt und (bei erlaubter Durchströmung in der vorgegebenen Durchströmungsrichtung ebenfalls selbststätig öffnet. Hierzu sind Klappen besonders vorteilhaft. Diese können zum selbsttätigen Öffnen und Schließen beispielsweise federbelastet sein und/oder aufgrund der Schwerkraft, der Strömungsrichtung und/oder einer Druckdifferenz schließen.

Nach einer weiteren vorteilhaften Ausgestaltung wird vorgeschlagen, dass das erste Schließelement und/oder das zweite Schließelement zumindest teilweise mit einem Kunststoff, insbesondere Elastomerwerkstoff gebildet ist. Bevorzugt sind eine zweite Dichtung und das zweite Schließelement gemeinsam bzw. einstückig mit dem Kunststoff (Elastomerwerkstoff) gebildet.

Nach einer weiteren vorteilhaften Ausgestaltung wird vorgeschlagen, dass im Bereich des ersten Schließelements und/oder im Bereich des zweiten Schließelements (jeweils) eine (erste bzw. zweite) Dichtung vorgesehen ist, die insbesondere dazu eingerichtet und angeordnet ist, die Gehäuseeinheit gegenüber einer Rohrinnenoberfläche eines Rohrs des Heizgeräts abzudichten und/oder in dem Rohr zu halten. Insbesondere ist im Bereich des zweiten Schließelements eine zweite Dichtung vorgesehen, die insbesondere dazu eingerichtet und angeordnet ist, die Gehäuseeinheit gegenüber einer Rohrinnenoberfläche eines Rohrs des Heizgeräts (radial) abzudichten. Hierzu kann die zweite Dichtung beispielsweise mindestens eine radial nach außen weisende Dichtlippe aufweisen. Die erste Dichtung kann beispielsweise zwischen korrespondierenden Flanschen des Rohrs (bzw. des Heizgerätes oder Brenners) und der Fördereinrichtung des Heizgeräts angeordnet, insbesondere eingeklemmt werden.

In diesem Zusammenhang ist es bevorzugt, wenn zumindest eine der Dichtungen integral mit einem der Schließelemente gebildet ist. Besonders bevorzugt sind die zweite Dichtung und das zweite Schließelement gemeinsam bzw. einstückig (ggf. mit dem Kunststoff/Elastomerwerkstoff) gebildet. Dabei können die zweite Dichtung und das zweite Schließelement in einer gemeinsamen Ebene oder in zwei zueinander parallelen Ebenen angeordnet sein. Vorzugsweise sind die zweite Dichtung und das zweite Schließelement integral bzw. gemeinsam in der Art eines (plattenförmigen) Deckels für die Gehäuseeinheit gebildet. Dabei kann der Deckel so geformt sein, dass er eine zweite (obere) Stirnseite der Gehäuseeinheit bedecken kann. Weiterhin ist die zweite Dichtung (nach außen und/oder quer zur Durchströmungsrichtung weisend) vorzugsweise um einen Außenumfang des Deckels umlaufend gebildet.

Nach einer weiteren vorteilhaften Ausgestaltung wird vorgeschlagen, dass die Gehäuseeinheit mit einem ersten Rahmen zum Halten des ersten Schließelements und einem zweiten Rahmen zum Halten des zweiten Schließelements gebildet ist. Der erste Rahmen kann dabei die Form einer im Wesentlichen plattenförmigen Basis aufweisen. Der zweite Rahmen kann dabei mindestes eine sich in Durchströmungsrichtung erstreckende (ggf. um den Kanal umlaufende) Kanalwand oder vorzugsweise vier sich in Durchströmungsrichtung erstreckende, den Kanal umgebende Kanalwände aufweisen. An einer der dem ersten Rahmen zugewandten Stirnseiten kann die mindestens eine Kanalwand bzw. können die Kanalwände den ersten Rahmen kontaktieren. An einer von dem ersten Rahmen abgewandten Stirnseite kann die mindestens eine Kanalwand bzw. können die Kanalwände mindestens einen (radial) nach außen weisenden (zweiten) Vorsprung aufweisen. Dieser (zweite) Vorsprung kann außenseitig von der zweiten Dichtung umgriffen werden.

Weiterhin können an dem ersten Rahmen und/oder dem zweiten Rahmen Verbindungsmittel vorgesehen sein, um den ersten Rahmen und den zweiten Rahmen (fest oder lösbar) miteinander zu verbinden. Dabei können die Verbindungsmittel in vorteilhafter Weise eine formschlüssige und/oder kraftschlüssige Verbindung zwischen dem ersten Rahmen und dem zweiten Rahmen bereitstellen. Mit anderen Worten ausgedrückt, können der erste Rahmen und der zweite Rahmen fest oder lösbar miteinander verbunden sein.

Nach einer weiteren vorteilhaften Ausgestaltung wird vorgeschlagen, dass das Rückstromsicherungsventil weiterhin mindestens eine Sensoreinrichtung zum Überwachen des ersten Schließelements und/oder des zweiten Schließelements umfasst. Beispielsweise kann das Rückstromsicherungsventil eine erste Sensoreinrichtung zum Überwachen des ersten Schließelements und eine zweite Sensoreinrichtung zum Überwachen des zweiten Schließelements umfassen. Die mindestens eine Sensoreinrichtung ist in diesem Zusammenhang vorzugsweise dazu eingerichtet zu sensieren, ob das entsprechende Schließelement geöffnet oder geschlossen ist.

Die mindestens eine Sensoreinrichtung umfasst vorteilhafterweise mindestens einen Lagesensor. Wenn die Schließelemente mit Klappen gebildet sind, können beispielsweise Lagesensoren an eine oder beide Klappen hinzugefügt werden, die das Schließen überwachen und insbesondere bei Bewegungsstörungen einer der Klappen eine Warnmeldung auslösen. Sensoren, die diese Lageüberwachung der Klappen übernehmen könnten, sind beispielsweise magnetische Systeme wie Hall-Sensoren oder Reed-Kontakte oder elektrische Kontakte, die nur im geschlossenen Zustand einen Stromkreis schließen.

Nach einer weiteren vorteilhaften Ausgestaltung wird vorgeschlagen, dass das Rückstromsicherungsventil weiterhin ein Fixiermittel zum (positionsgenauen) Fixieren der Gehäuseeinheit (bzw. des Rückstromsicherungsventils) in dem Heizgerät umfasst. Bei dem Fixiermittel kann es sich beispielsweise um eine Nase handeln, die in eine zur Aufnahme der Nase geformte Ausnehmung eingreift. Andere Fixier- oder Verriegelungselemente sind ebenfalls denkbar.

Nach einem weiteren Aspekt wird auch eine Heizungsanlage mit mindestens zwei Heizgeräten angegeben, die an eine gemeinsame (mehrfachbelegte) Abgasanlage angeschlossen sind, wobei zumindest eines der Heizgeräte, vorzugsweise jedes der Heizgeräte ein hier beschriebenes Rückstromsicherungsventil aufweist.

Nach einem weiteren Aspekt kann auch ein Verfahren zur Montage eines Rückstromsicherungsventils in einem Heizgerät beschrieben werden, umfassend zumindest die folgenden Schritte:
a) Bereitstellen eines hier beschriebenen Rückstromsicherungsventils,
b) Einbringen (insbesondere Einschieben) zumindest eines (vorderen bzw. oberen) Abschnitts des Rückstromsicherungsventils in ein Rohr des Heizgeräts,
c) Fixieren der Rückstromsicherungsventils im Bereich eines Flansches des Rohrs.

In oder vor Schritt a) kann dabei ein Zusammensetzten des Rückstromsicherungsventils erfolgen, beispielsweise umfassend ein (formschlüssiges oder kraftschlüssiges) Verbinden des ersten (bzw. unteren) Rahmens und des zweiten (bzw. oberen) Rahmens miteinander. Zuvor können die zweite Dichtung und das zweite Schließelement vorzugsweise gemeinsam mit dem zweiten Rahmen verbunden worden sein. Zudem kann zuvor die erste Dichtung mit dem ersten Rahmen verbunden worden sein.

In Schritt b) kann das Einbringen so erfolgen, dass das zweite Schließelement und/oder die zweite Dichtung beabstandet zu dem Flansch in dem Rohr positioniert werden. Weiterhin kann das Einbringen in Schritt b) so lange erfolgen, bis ein im Bereich des ersten Schließelements vorgesehener, (radial) nach außen weisender Vorsprung des Rückstromsicherungsventils in Kontakt mit einem (radial) nach innen weisenden Kragen des Rohrs und/oder des Flansches gelangt. Dabei kann die erste Dichtung umlaufend um den Vorsprung angeordnet sein, sodass dabei die erste Dichtung mit dem Kragen in Kontakt gelangt.

In Schritt c) kann das Fixiermittel beispielsweise in eine zur Aufnahme des Fixiermittels geformte Ausnehmung eingreifen. Die Ausnehmung kann beispielsweise in dem Flansch gebildet sein.

Die im Zusammenhang mit dem Rückstromsicherungsventil erörterten Details, Merkmale und vorteilhaften Ausgestaltungen können entsprechend auch bei dem hier vorgestellten Heizgerät, der Heizungsanlage und/oder dem Verfahren auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert.

Es stellen dar:
Figur 1: ein Heizgerät mit einem hier beschriebenen Rückstromsicherungsventil in perspektivischer Ansicht,
Figur 2: das Rückstromsicherungsventil aus Figur 1 in geöffnetem Zustand und in geschnittener Darstellung,
Figur 3: das Rückstromsicherungsventil aus Figur 1 in geschlossenem Zustand und in geschnittener Darstellung, und
Figur 4: ein mögliches Verfahren zur Bereitstellung des Rückstromsicherungsventils aus Figur 1.

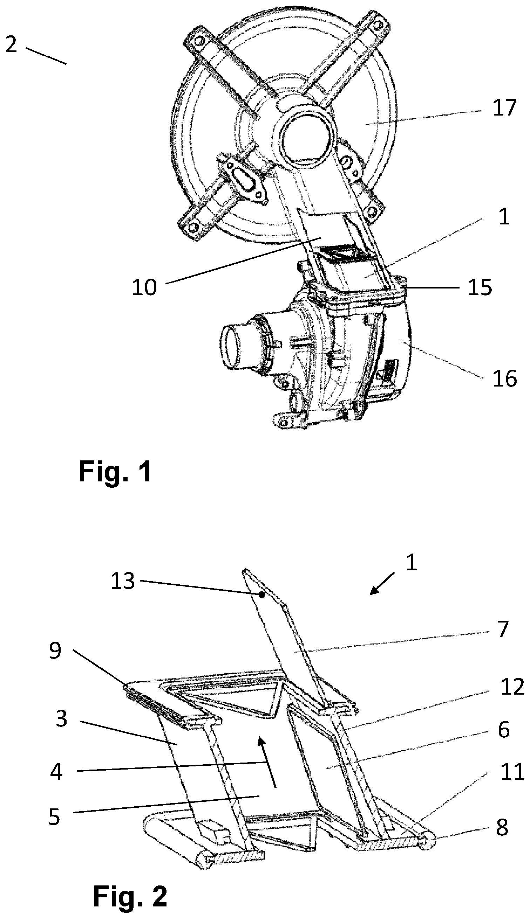

Figur 1 zeigt ein Heizgerät 2 mit einem hier beschriebenen Rückstromsicherungsventil 1 in perspektivischer (teilweise geschnittener) Ansicht. Figur 1 zeigt in diesem Zusammenhang einen bevorzugten Einbauort des Rückstromsicherungsventils 1. Dieses wird hier in der Schnittstelle zwischen Gebläse 16 und Brennertür 17 gehalten. Diese Schnittstelle ist hier beispielhaft mit einem Rohr 10 gebildet. Das Rückstromsicherungsventil 1 ist beispielhaft im Bereich eines Flansches 15 des Rohrs 10 des Heizgeräts 2 angeordnet und ragt ausgehend von dem Flansch 15 zumindest teilweise in das Rohr 10 hinein.

Figur 2 zeigt einen Schnitt durch das geöffnete Rückstromsicherungsventil 1. Das Rückstromsicherungsventil 1 umfasst eine Gehäuseeinheit 3, durch die ein in einer vorgegebenen Durchströmungsrichtung 4 durchströmbarer Kanal 5 verläuft, ein erstes (unteres) Schließelement 6, welches dazu eingerichtet und angeordnet ist selbsttätig eine Schließstellung einzunehmen, um eine Durchströmung des Kanals 5 entgegen der vorgegebenen Durchströmungsrichtung 4 zu verhindern, und ein zweites (oberes) Schließelement 7, welches in der Durchströmungsrichtung 4 von dem ersten Schließelement 6 beabstandet ist und welches dazu eingerichtet und angeordnet ist selbsttätig eine Schließstellung einzunehmen, um eine Durchströmung des Kanals 5 entgegen der vorgegebenen Durchströmungsrichtung 4 zu verhindern.

Das erste Schließelement 6 und das zweite Schließelement 7 sind hier beispielhaft jeweils mit einer Klappe gebildet. Die Klappen 6, 7 sind weiterhin beispielhaft aus einem Elastomerwerkstoff. Die Klappen 6, 7 liegen im geschlossenen Zustand auf zwei Kunststoffrahmen auf und dichten bei Überdruck gegen die Rahmen ab.

Weiterhin zeigt Figur 1, dass beispielsweise im Bereich des ersten Schließelements 6 und im Bereich des zweiten Schließelements 7 jeweils eine Dichtung 8, 9 vorgesehen sein kann. Die erste Dichtung 7 ist dabei dazu eingerichtet und angeordnet die Gehäuseeinheit 3 in dem Rohr 10 zu halten. Die zweite Dichtung 8 ist dazu eingerichtet und angeordnet die Gehäuseeinheit 3 gegenüber einer Rohrinnenoberfläche des Rohrs 10 des Heizgeräts 2 (hier nicht dargestellt, vgl. Figur 1) abzudichten.

Weiterhin ist in Figur 1 dargestellt, dass die zweite Dichtung 9 integral mit dem zweiten Schließelemente 7 gebildet sein kann. Hierzu ist in die obere Klappe 7 eine Dichtung 9 integriert, welche den oberen Teil zur Brennertürinnenkontur (vgl. Figur 1) abdichtet. Darüber hinaus ist die erste Dichtung 8 hier beispielhaft zum Abdichten des Gebläses (vgl. Figur 1) zur Brennertür (vgl. Figur 1) vorgesehen.

Zudem ist die Gehäuseeinheit 3 gemäß der beispielhaften Darstellung nach Figur 1 mit einem ersten (unteren) Rahmen 11 zum Halten des ersten Schließelements 6 und einem zweiten (oberen) Rahmen 12 zum Halten des zweiten Schließelements 7 gebildet. Die beiden Rahmen 11, 12 sind beispielhaft formschlüssig miteinander (lösbar) verbunden.

In Figur 1 ist darüber hinaus beispielhaft angedeutet, dass das Rückstromsicherungsventil 1 auch eine Sensoreinrichtung 13 zum Überwachen des ersten Schließelements 6 und/oder des zweiten Schließelements 7 aufweisen kann.

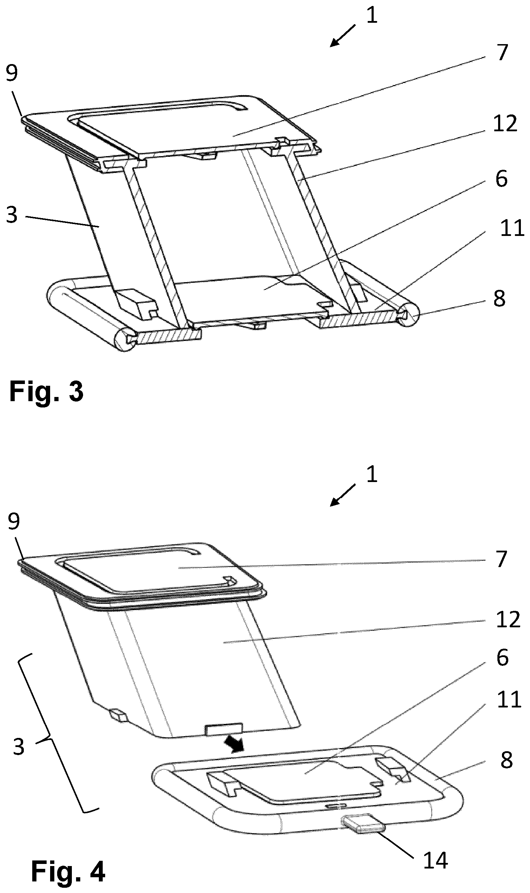

Figur 3 zeigt einen Schnitt durch das geschlossene Rückstromsicherungsventil 1.

Figur 4 veranschaulicht ein mögliches Verfahren zur Bereitstellung des Rückstromsicherungsventils 1. Hierzu wird beispielhaft der zweite (obere) Rahmen 12 auf den ersten (unteren) Rahmen 11 geschoben und so eine Einheit, nämlich die Gehäuseeinheit 3, gebildet. Weiterhin ist in Figur 4 beispielhaft gezeigt, dass das Rückstromsicherungsventil 1 weiterhin ein Fixiermittel 14 zum Fixieren der Gehäuseeinheit 3 in dem Heizgerät 2 aufweisen kann.

### Bezugszeichenliste

- 1: Rückstromsicherungsventil
- 2: Heizgerät
- 3: Gehäuseeinheit
- 4: Durchströmungsrichtung
- 5: Kanal
- 6: erstes Schließelement
- 7: zweites Schließelement
- 8: Dichtung
- 9: Dichtung
- 10: Rohr
- 11: erster Rahmen
- 12: zweiter Rahmen
- 13: Sensoreinrichtung
- 14: Fixiermittel
- 15: Flansch
- 16: Gebläse
- 17: Brennertür

## Patentansprüche

1. Heizgerät (2) mit einem Gebläse (16) und einem Brenner, zwischen denen ein Rückstromsicherungsventil (1) angeordnet ist, wobei das Rückstromsicherungsventil (1) folgendes umfasst:
- eine Gehäuseeinheit (3), durch die ein in einer vom Gebläse (16) vorgegebenen Durchströmungsrichtung (4) durchströmbarer Kanal (5) verläuft, wobei die Gehäuseeinheit (3) im Bereich eines Flansches (15) eines Rohrs (10) des Heizgeräts (2) fixiert ist und ausgehend von dem Flansch (15) zumindest teilweise in das Rohr (10) hineinragt,
- ein erstes Schließelement (6), welches dazu eingerichtet und angeordnet ist selbsttätig eine Schließstellung einzunehmen, um eine Durchströmung des Kanals (5) entgegen der vorgegebenen Durchströmungsrichtung (4) zu verhindern,
**gekennzeichnet durch**
- ein zweites Schließelement (7), welches in der Durchströmungsrichtung (4) von dem ersten Schließelement (6) beabstandet ist und welches dazu eingerichtet und angeordnet ist selbsttätig eine Schließstellung einzunehmen, um eine Durchströmung des Kanals (5) entgegen der vorgegebenen Durchströmungsrichtung (4) zu verhindern
wobei das erste Schließelement (6)und das zweite Schließelement (7) in oder an der Gehäuseeinheit (3) angeordnet sind.

2. Heizgerät (2) nach Anspruch 1, wobei zumindest das erste Schließelement (6) oder das zweite Schließelement (7) mit einer Klappe gebildet ist.

3. Heizgerät (2) nach Anspruch 1 oder 2, wobei zumindest das erste Schließelement (6) oder das zweite Schließelement (7) zumindest teilweise mit einem Kunststoff, insbesondere Elastomerwerkstoff gebildet ist.

4. Heizgerät (2) nach einem der vorhergehenden Ansprüche, wobei zumindest im Bereich des ersten Schließelements (6) oder im Bereich des zweiten Schließelements (7) eine Dichtung (8, 9) vorgesehen ist, die insbesondere dazu eingerichtet und angeordnet ist die Gehäuseeinheit (3) zumindest gegenüber einer Rohrinnenoberfläche eines Rohrs (10) des Heizgeräts (2) abzudichten oder in dem Rohr (10) zu halten.

5. Heizgerät (2) nach Anspruch 4, wobei zumindest eine der Dichtungen (9) integral mit einem der Schließelemente (7) gebildet ist.

6. Heizgerät (2) nach einem der vorhergehenden Ansprüche, wobei die Gehäuseeinheit (3) mit einem ersten Rahmen (11) zum Halten des ersten Schließelements (6) und einem zweiten Rahmen (12) zum Halten des zweiten Schließelements (7) gebildet ist.

7. Heizgerät (2) nach einem der vorhergehenden Ansprüche, weiterhin umfassend mindestens eine Sensoreinrichtung (13) zum Überwachen zumindest des ersten Schließelements (6) oder des zweiten Schließelements (7).

8. Heizgerät (2) nach einem der vorhergehenden Ansprüche, weiterhin umfassend ein Fixiermittel (14) zum Fixieren der Gehäuseeinheit (3) in dem Heizgerät (2).

9. Heizgerät (2) nach einem der vorhergehenden Ansprüche, wobei die Gehäuseeinheit (3) im Bereich eines hin zu einer Fördereinrichtung weisenden Flansches eines die Fördereinrichtung mit einem Brenner verbindenden Rohrs des Heizgeräts (1) fixiert ist.

10. Heizungsanlage mit mindestens zwei Heizgeräten, die an eine gemeinsame Abgasanlage angeschlossen sind, wobei zumindest eines der Heizgeräte (2) nach einem der vorhergehenden Ansprüche ausgebildet ist.

## Claims

1. Heating device (2) with a blower (16) and a burner, between which a backflow prevention valve (1) is arranged, wherein the backflow prevention valve (1) comprises the following:
- a housing unit (3) through which a channel (5) runs, through which air can flow in a direction (4) predetermined by the fan (16), wherein the housing unit (3) is fixed in the area of a flange (15) of a pipe (10) of the heater (2) and protrudes at least partially into the pipe (10) from the flange (15),
- a first closing element (6) which is designed and arranged to automatically assume a closed position in order to prevent flow through the channel (5) against the specified flow direction (4),
**characterised by**
- a second closing element (7) which is spaced apart from the first closing element (6) in the flow direction (4) and which is designed and arranged to automatically assume a closed position in order to prevent flow through the channel (5) against the specified flow direction (4), wherein the first closing element (6) and the second closing element (7) are arranged in or on the housing unit (3).

2. . Heating device (2) according to claim 1, wherein at least the first closing element (6) or the second closing element (7) is formed with a flap.

3. . Heating device (2) according to claim 1 or 2, wherein at least the first closing element (6) or the second closing element (7) is at least partially formed with a plastic, in particular an elastomer material.

4. . Heating device (2) according to one of the preceding claims, wherein at least in the region of the first closing element (6) or in the region of the second closing element (7) a seal (8, 9) is provided, which is in particular designed and arranged to seal the housing unit (3) at least against an inner surface of a pipe (10) of the heating device (2) or to hold it in the pipe (10).

5. . Heating device (2) according to claim 4, wherein at least one of the seals (9) is formed integrally with one of the closure elements (7).

6. . Heating device (2) according to one of the preceding claims, wherein the housing unit (3) is formed with a first frame (11) for holding the first closing element (6) and a second frame (12) for holding the second closing element (7).

7. . Heating device (2) according to one of the preceding claims, further comprising at least one sensor device (13) for monitoring at least the first closure element (6) or the second closure element (7).

8. . Heating device (2) according to one of the preceding claims, further comprising a fixing means (14) for fixing the housing unit (3) in the heating device (2).

9. . Heating device (2) according to one of the preceding claims, wherein the housing unit (3) is fixed in the area of a flange of a pipe of the heating device (1) connecting the conveyor device to a burner, which flange faces the conveyor device.

10. . Heating system with at least two heating devices connected to a common exhaust system, wherein at least one of the heating devices (2) is designed according to one of the preceding claims.

## Revendications

1. Appareil de chauffage (2) avec un ventilateur (16) et un brûleur, entre lesquels une soupape anti-retour (1) est disposée, dans lequel la soupape anti-retour (1) comprend :
- une unité de boîtier (3) à travers laquelle s'étend un canal (5) pouvant être traversé dans une direction d'écoulement (4) prédéfinie par le ventilateur (16), dans lequel l'unité de boîtier (3) est fixée au niveau d'une bride (15) d'un tuyau (10) de l'appareil de chauffage (2) et fait saillie au moins partiellement dans le tuyau (10) à partir de la bride (15),
- un premier élément de fermeture (6), lequel est configuré et disposé pour prendre automatiquement une position de fermeture pour empêcher un écoulement dans le canal (5) à l'encontre de la direction d'écoulement (4) prédéfinie,
**caractérisé par**
- un second élément de fermeture (7), lequel est espacé du premier élément de fermeture (6) dans la direction d'écoulement (4) et lequel est configuré et disposé pour prendre automatiquement une position de fermeture pour empêcher un écoulement dans le canal (5) à l'encontre de la direction d'écoulement prédéfinie (4)
dans lequel le premier élément de fermeture (6) et le second élément de fermeture (7) sont disposés dans ou sur l'unité de boîtier (3).

2. Appareil de chauffage (2) selon la revendication 1, dans lequel au moins le premier élément de fermeture (6) ou le second élément de fermeture (7) est formé avec un clapet.

3. Appareil de chauffage (2) selon la revendication 1 ou 2, dans lequel au moins le premier élément de fermeture (6) ou le second élément de fermeture (7) est formé au moins partiellement d'une matière plastique, en particulier de matériau élastomère.

4. Appareil de chauffage (2) selon l'une quelconque des revendications précédentes, dans lequel au niveau du premier élément de fermeture (6) ou au niveau du second élément de fermeture (7), un joint d'étanchéité (8, 9) est prévu, qui est en particulier configuré et disposé pour étanchéifier l'unité de boîtier (3) au moins par rapport à une surface intérieure de tube (10) de l'appareil de chauffage (2) ou pour le maintenir dans le tube (10).

5. Appareil de chauffage (2) selon la revendication 4, dans lequel au moins un des joints d'étanchéité (9) est formé d'un seul tenant avec un des éléments de fermeture (7).

6. Appareil de chauffage (2) selon l'une quelconque des revendications précédentes, dans lequel l'unité de boîtier (3) est formée avec un premier cadre (11) pour maintenir le premier élément de fermeture (6) et un second cadre (12) pour maintenir le second élément de fermeture (7).

7. Appareil de chauffage (2) selon l'une quelconque des revendications précédentes, comprenant en outre au moins un appareil de capteur (13) pour surveiller au moins le premier élément de fermeture (6) ou le second élément de fermeture (7).

8. Appareil de chauffage (2) selon l'une quelconque des revendications précédentes, comprenant en outre un moyen de fixation (14) pour fixer l'unité de boîtier (3) dans l'appareil de chauffage (2).

9. Appareil de chauffage (2) selon l'une quelconque des revendications précédentes, dans lequel l'unité de boîtier (3) est fixée au niveau d'une bride orientée vers un appareil de transport d'un tuyau connectant l'appareil de transport à un brûleur de l'appareil de chauffage (1).

10. Installation de chauffage avec au moins deux appareils de chauffage qui sont raccordés à un système d'échappement commun, dans lequel au moins un des appareils de chauffage (2) est conçu selon l'une quelconque des revendications précédentes.
